# EUROPÄISCHE PATENTANMELDUNG

(11) **EP 1 798 433 A1**
(43) Veröffentlichungstag der Anmeldung: **20.06.2007**
(21) Anmeldenummer: 06024489.4
(22) Anmeldetag: 25.11.2006
(51) Int. Cl.: F16D 13/64

(54) **Mitnehmerscheibe für eine Kupplungseinrichtung und Verfahren zur Herstellung einer solchen Mitnehmerscheibe**

(30) Priorität: 09.12.2005 DE 102005058948
(71) Anmelder: ZF FRIEDRICHSHAFEN AG, 88046 Friedrichshafen (DE)
(72) Erfinder: Wickel, Christian, 97792 Riedenberg (DE)

(57) **Zusammenfassung**

Die Erfindung betrifft eine Mitnehmerscheibe (1) für eine Kupplungseinrichtung, insbesondere für eine Kraftfahrzeugkupplungseinrichtung, umfassend einen um eine Drehachse (2) herum angeordneten und im wesentlichen ringscheibenförmig ausgebildeten Belagträger (3), der vorzugsweise an beiden Stirnseiten (4, 5) mit einem Reibbelag (6) versehen ist, sowie ein um die Drehachse (2) herum angeordnetes und im wesentlichen scheibenförmig ausgebildetes Mitnehmerteil (7', 7"), wobei der Belagträger (3) und das Mitnehmerteil (7', 7") miteinander verbunden sind. Um die Wirtschaftlichkeit der Herstellung einer solchen Scheibe zu verbessern, ist erfindungsgemäß vorgesehen, dass der Belagträger (3) und das Mitnehmerteil (7', 7") durch eine Klebverbindung miteinander verbunden sind. Des weiteren betriff die Erfindung ein Verfahren zum Herstellen einer solchen Mitnehmerscheibe.

## Beschreibung

Die Erfindung betrifft eine Mitnehmerscheibe für eine Kupplungseinrichtung, insbesondere für eine Kraftfahrzeugkupplungseinrichtung, umfassend einen um eine Drehachse herum angeordneten und im wesentlichen ringscheibenförmig ausgebildeten Belagträger, der vorzugsweise an beiden Stirnseiten mit einem Reibbelag versehen ist, sowie ein um die Drehachse herum angeordnetes und im wesentlichen scheibenförmig oder segmentiert ausgebildetes Mitnehmerteil, wobei der Belagträger und das Mitnehmerteil miteinander verbunden sind. Des weiteren betrifft die Erfindung ein Verfahren zur Herstellung einer solchen Mitnehmerscheibe.

Bei einer Kupplungseinrichtung dieser Art, wie sie beispielsweise in der DE 199 26 681 A1 beschrieben ist, wird eine Mitnehmer- oder Kupplungsscheibe beiderseits mit einem Reibbelag versehen, wobei die Mitnehmerscheibe zwischen einer Anpressplatte und einem Schwungrad angeordnet ist. Durch Beaufschlagung der Anpressplatte mit einer axial wirkenden Kraft wird Reibschluss zwischen Anpressplatte, Mitnehmerscheibe und Schwungrad hergestellt, wodurch ein Drehmoment übertragen werden kann. Dabei wirkt zwischen zwei Reibpartnern, also einerseits zwischen der Anpressplatte und der Mitnehmerscheibe und andererseits zwischen der Mitnehmerscheibe und dem Schwungrad, eine Reibkraft, die sich aus dem Produkt aus Anpresskraft und Reibkoeffizient ergibt.

Für die Anbindung der Reibbeläge an der Mitnehmerscheibe sind verschiedene Möglichkeiten bekannt.

Am meisten verbreitet ist die Anbringung bzw. Befestigung des Reibbelags an der Kupplungsscheibe mittels einer Nietverbindung. Üblicherweise wird dies durch eine Lösung bewerkstelligt, wie sie in der DE-PS 14 50 977, der DE 19 12 334 A1, der DE 31 45 662 A1, der US 2,324,913, der US 2,299,028, der US 2,547,427, der DE 36 19 894 C2, der DE 42 26 763 C2 und der GB 2 103 311 A offenbart ist. Die Reibbeläge werden hiernach mittels Nieten am Kupplungsscheibenkörpern festgelegt.

Bekannt ist es auch, den Reibbelag auf dem Kupplungsscheibenkörper aufzukleben, wobei insbesondere ein Aufpressen des Reibbelags auf den Kupplungsscheibenkörper vorgesehen ist. Entsprechende Lösungen sind in der DE 31 45 054 A1 und in der DE 100 15 206 A1 sowie in der EP 0 342 865 A1 offenbart.

Die Mitnehmerscheibe selber besteht oft aus zwei Teilen, nämlich aus dem Belagträger und einem Mitnehmerteil. Der Belagträger dient zur Aufnahme der Reibbeläge, während das mit dem Belagträger fest verbundene Mitnehmerteil mit einer Welle drehfest verbunden ist. Eine solche Mitnehmerscheibe ist in der DE 43 35 674 A1 offenbart.

Dabei werden der Belagträger und das Mitnehmerteil häufig stoffschlüssig miteinander verbunden, nämlich mittels Schweißen oder Löten. Die DE 199 64 129 A1, die GB 2 165 323 A und die US 5,419,422 zeigen Lösungen, bei denen die genannten Teile miteinander verschweißt sind. Eine Lötverbindung offenbart die DE 43 35 674 A1.

Eine alternative Verbindungstechnologie ist die Vernietung, wozu exemplarisch auf die US 5,413,202 hingewiesen wird.

Bei einer gattungsgemäßen, zusammengesetzten Mitnehmerscheibe hat es sich als vorteilhaft erwiesen, dass der Reibbelag auf den Belagträger mittels einer Klebverbindung fixiert wird. Damit wird in vorteilhafter Weise erreicht, dass ein relativ großes Reibbelag-Verschleißvolumen zur Verfügung steht. Bei aufgenieteten Reibbelägen können diese meist nur soweit verschlissen werden, bis die Höhe des Nietkopfs erreicht wird, weil ab diesem Punkt metallische Berührung zwischen Mitnehmerscheibe und Schwungrad bzw. Druckplatte vorliegt.

Problematisch ist es dabei, dass die Verwendung einer zwei- oder mehrteilig ausgebildeten Mitnehmerscheibe einen relativ hohen Fertigungsaufwand darstellt, weil die verschiedenen Verbindungstechniken zwischen Reibbelag und Belagträger einerseits und zwischen Belagträger und Mitnehmerteil andererseits jeweils unterschiedliche Vorbehandlungen der jeweiligen Verbindungsstelle erfordern. Als Folge dessen sind entsprechend hohe Produktionskosten festzustellen.

Der Erfindung liegt daher die Aufgabe zugrunde, eine Mitnehmerscheibe der eingangs genannten Art so fortzubilden, dass es möglich wird, den Fertigungsaufwand und damit die Herstellkosten zu senken. Es soll also möglich werden, auf die Mitnehmerscheibe die Reibbeläge kostengünstig aufzubringen und die Verbindung zwischen dem Belagträger und dem Mitnehmerteil der Mitnehmerscheibe in einfacher Weise herzustellen.

Die Lösung dieser Aufgabe durch die Erfindung ist dadurch gekennzeichnet, dass der Belagträger und das Mitnehmerteil der Mitnehmerscheibe durch eine Klebverbindung miteinander verbunden sind.

Erfindungsgemäß erfolgt die Verbindung zwischen den beiden bzw. den mindestens zwei Teilen der Mitnehmerscheibe also durch Kleben. Zusätzlich zu der erfindungsgemäß vorgesehenen Klebeverbindung kann auch eine Nietverbindung vorgesehen werden.

Bevorzugt ist dabei vorgesehen, dass der Belagträger und das Mitnehmerteil an einer in radiale Richtung verlaufenden, ebenen Ringfläche aneinander liegen. Die Ringfläche erstreckt sich dabei bevorzugt radial von einer Bohrung im Belagträger mit einem Innendurchmesser bis zum Außendurchmesser des Mitnehmerteils. Weiterhin hat es sich bewährt, dass die Differenz zwischen dem Außendurchmesser des Mitnehmerteils und dem Innendurchmesser der Bohrung im Belagträger mindestens 15 %, vorzugsweise mindestens 25 %, des Außendurchmessers der Mitnehmerscheibe beträgt. Dadurch kann ein sehr fester Verbund zwischen den beiden zusammengeklebten Teilen der Mitnehmerscheibe hergestellt werden, weil der flächige Überlappungsbereich zwischen den Teilen relativ groß ist.

Das Mitnehmerteil ist nach einer Weiterbildung zweiteilig ausgebildet und jeweils ein Teil des Mitnehmerteils auf jeder Stirnseite des Belagträgers aufgeklebt. Dabei kann jedes Teil des Mitnehmerteils scheibenförmig ausgebildet sein.

Wie noch zu sehen sein wird, ergeben sich bezüglich der Herstellungsweise der Mitnehmerscheibe besondere Vorteile, wenn auch der mindestens eine Reibbelag auf den Belagträger aufgeklebt ist.

Die Klebeverbindung der beiden bzw. der mindestens zwei Teile der Mitnehmerscheibe hat in vorteilhafter Weise zur Folge, dass weiter vorgesehen werden kann, dass der Belagträger und das Mitnehmerteil aus unterschiedlichen Materialien bestehen. Beispielsweise kann der Belagträger aus Leichtmetall, insbesondere aus Aluminium oder Magnesium, bestehen. Das Mitnehmerteil kann indes aus Stahl bestehen, insbesondere aus gehärtetem Stahl. Das Mitnehmerteil kann dabei mindestens eine Ausnehmung für ein Federelement aufweisen, was die Fertigung aus gehärtetem Stahl besonders vorteilhaft werden lässt, da dann die üblicherweise vorgesehenen Federn für die Schwingungsdämpfung dort stabil untergebracht werden können.

Das Verfahren zur Herstellung einer solchen Mitnehmerscheibe mit einem Belagträger, mindestens einem mit diesem verbundenen Reibbelag sowie mit mindestens einem Mitnehmerteil ist dadurch gekennzeichnet, dass der Belagträger und das mindestens eine Mitnehmerteil sowie der Belagträger und der mindestens eine Reibbelag in einem gleichzeitig durchgeführten Klebeprozess miteinander verbunden werden.

Mit Vorteil ist dabei vorgesehen, dass zwei Reibbeläge an beiden Stirnseiten des Belagträgers aufgeklebt werden.

Mit der erfindungsgemäßen Ausgestaltung wird es möglich, dass eine Mitnehmerscheibe der beschriebenen Art sehr einfach und kostengünstig gefertigt werden kann. Vor dem Verkleben der Teile der Mitnehmerscheibe müssen diese gegebenenfalls gereinigt und klebevorbereitet werden, wobei dieser Vorbereitungsschritt jedoch ausreichend ist, um dann sowohl die Reibbeläge am Belagträger anzubringen als auch die beiden bzw. die mindestens zwei Teile des Mitnehmerteils und den Belagträger miteinander zu verkleben.

Ein weiterer Vorteil des Erfindungsvorschlags besteht darin, dass die Paarungen der Materialien, aus denen die Mitnehmerscheibe besteht, beliebig gewählt werden kann, da mit der Klebeverbindung praktisch beliebige Werkstoffe miteinander verbunden werden können.

Schließlich wird es möglich, das Massenträgheitsmoment der Mitnehmerscheibe zu reduzieren, denn die zum Einsatz kommenden Teile können mit mehr Gestaltungsfreiheit ausgebildet, d. h. insbesondere ausgestanzt werden.

In der Zeichnung ist ein Ausführungsbeispiel der Erfindung dargestellt. Es zeigen:

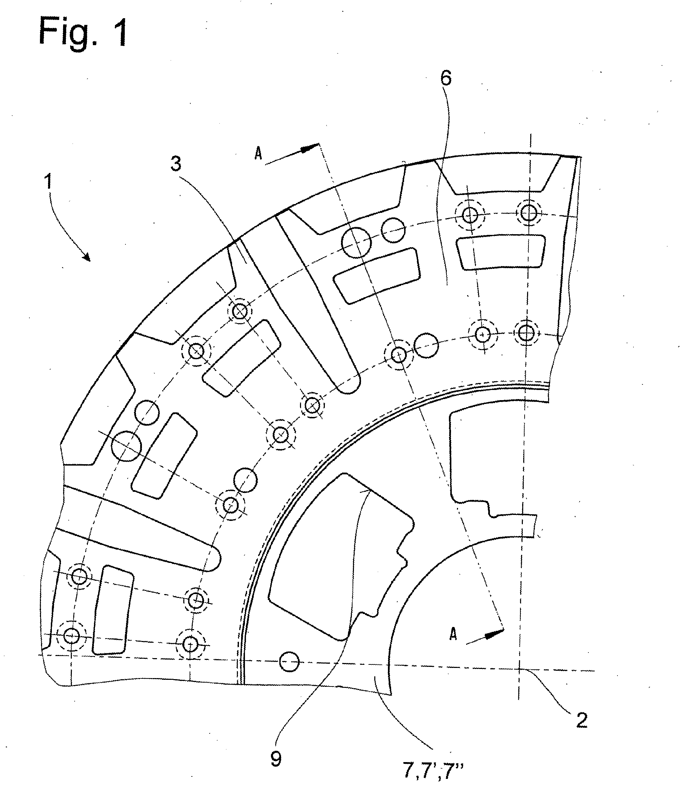

- Fig.1: die Seitenansicht einer Mitnehmerscheibe einer Kraftfahrzeugkupplungseinrichtung,
- Fig. 2: den Schnitt A-B gemäß Fig. 1 durch die Mitnehmerscheibe und
- Fig. 3: die zu Fig. 2 entsprechende Ansicht, wobei die einzelnen Teile im noch nicht miteinander verbundenen Zustand dargestellt sind.

In den Figuren ist eine Mitnehmerscheibe 1 einer Kraftfahrzeugkupplungseinrichtung zu sehen, die in üblicher Weise aufgebaut ist. Die Mitnehmerscheibe 1 rotiert um eine Drehachse 2. Um diese herum ist konzentrisch ein ringscheibenförmig ausgebildeter Belagträger 3 sowie ein scheibenförmig ausgebildetes Mitnehmerteil 7 angeordnet. Das Mitnehmerteil 7 besteht dabei aus zwei Teilen 7' und 7".

Am Belagträger 3 ist mindestens ein Reibbelag 6 angeordnet. In den Figuren ist zu sehen, dass hier der Reibbelag 6 nur an einer der Stirnseiten 4 bzw. 5 des Belagträgers 3 angebracht ist, nämlich an der Stirnseite 4. Im Regelfall wird indes vorgesehen sein, dass an beiden Stirnseiten 5, 6 jeweils ein Reibbelag 6 angeordnet ist.

Im Mitnehmerteil 7 sind Ausnehmungen 8 (Fenster) zur Aufnahme von Federn für die Schwingungsdämpfung eingearbeitet, wie es für derartige Mitnehmerscheiben typisch ist.

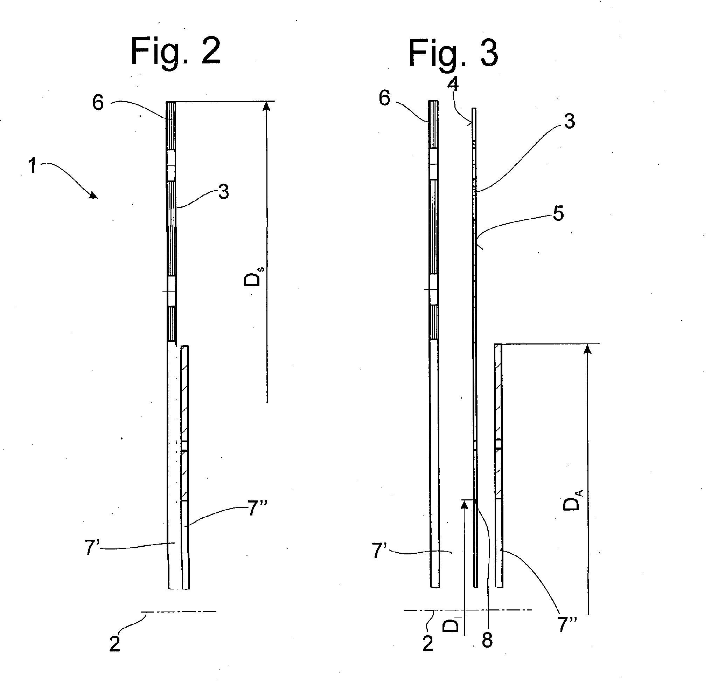

Der Belagträger 3 ist ringscheibenförmig ausgebildet, d. h. er hat eine Bohrung 8 mit einem Innendurchmesser D_{I}. Der Außendurchmesser des Belagträgers 3 entspricht im wesentlichen dem Außendurchmesser D_{S} der Mitnehmerscheibe 1 (s. Fig. 2 und 3). Die beiden Teile 7' und 7" des Mitnehmerteils 7 haben im Ausführungsbeispiel zwar eine unterschiedliche Dicke, jedoch dieselben Durchmesser. Dargestellt ist der Außendurchmesser D_{A} der beiden Teile 7', 7" des Mitnehmerteils 7.

Aus den geometrischen Verhältnissen - wie sie in Fig. 3 zu sehen sind - ergibt sich, dass sich die ringscheibenförmige Kontaktfläche zwischen dem Teil 7' und dem Belagträger 3 bzw. zwischen dem Belagträger 3 und dem Teil 7" radial über die Differenz der beiden Durchmesser D_{A} und D_{I} erstreckt. Diese Differenz beträgt bevorzugt mindestens 15 % des Außendurchmessers D_{S} der Mitnehmerscheibe 1. Damit wird sichergestellt, dass eine hinreichende Kontaktfläche zwischen den Teilen 7' und 3 bzw. 3 und 7" vorliegt, die zur Herstellung einer festen Klebeverbindung ausreicht.

Bei der Herstellung der Mitnehmerscheibe 1 wird nach der Reinigung der zusammenwirkenden Teile Klebstoff auf die Kontaktfläche zwischen dem Belagträger 3 und dem Reibbelag 6 bzw. den Reibbelägen sowie auf die Kontaktflächen zwischen den Teilen 7' und 3 sowie 3 und 7" aufgebracht. Dann werden die Teile aus der in Fig. 3 dargestellten Stellung in diejenige gemäß Fig. 2 gebracht, d. h. die einzelnen Teile werden zusammengefügt und eine axial gerichtete Presskraft auf die zu verklebenden Teile aufgebracht.

Im Ausführungsbeispiel werden also die drei Klebverbindungen zwischen den Teilen 6 und 3, den Teilen 7' und 3 und den Teilen 3 und 7" gleichzeitig in einem gemeinsamen Prozess hergestellt. Beim Verpressen der Teile zu dem in Fig. 2 skizzierten Verbund muss dafür Sorge getragen werden, dass alle zusammenzudrückenden Teile mit hinreichender Presskraft beaufschlagt werden. Dies wird beispielsweise durch Abstandshalter sichergestellt, die so auf die Stirnseite der Mitnehmerscheibe aufgelegt werden, dass nach Einlegen der Mitnehmerscheibe samt Abstandshalter in eine Presse eine homogene Presskraftverteilung vorliegt.

Das Aushärten des Klebers erfolgt unter Temperatur und Druck, was jedoch im Einzelfall vom verwendeten Klebstoff abhängt. Klebstoffen, mit denen die Reibbeläge auf dem Belagträger festgeklebt werden können, sind im Stand der Technik hinlänglich bekannt. Dasselbe gilt für Kleber, mit denen Metalle verklebt werden können. Idealerweise - aber nicht zwingend - wird derselbe Klebstoff für alle Klebeverbindungen der Mitnehmerscheibe eingesetzt.

Vorliegend wird ein Mitnehmerteil 7 aus gehärtetem Stahl sowie ein Belagträger 3 aus Aluminium verwendet. Klebstoffe zum Verbinden dieser Materialpaarung sind hinlänglich bekannt. Da das Mitnehmerteil 7 mit seinen Ausnehmungen 9 die Federn für die Schwingungsdämpfung aufnehmen und im Betrieb sicher tragen müssen, besteht dieses Teil bzw. bestehen die beiden Teile 7' und 7" aus gehärtetem Stahl.

Durch das Aufkleben der Reibbeläge 6 ergibt sich eine hohe Einsatzdauer der Mitnehmerscheibe, da ein hohes Verschleißvolumen der Reibbeläge zur Verfügung steht (im Unterschied zur Lösung mit festgenieteten Reibbelägen).

### Bezugszeichenliste

- 1: Mitnehmerscheibe
- 2: Drehachse
- 3: Belagträger
- 4: Stirnseite
- 5: Stirnseite
- 6: Reibbelag
- 7: Mitnehmerteil
- 7': Teil des Mitnehmerteils
- 7": Teil des Mitnehmerteils
- 8: Bohrung
- 9: Ausnehmung
- D_{I}: Innendurchmesser
- D_{A}: Außendurchmesser
- D_{S}: Außendurchmesser

## Patentansprüche

1. Mitnehmerscheibe (1) für eine Kupplungseinrichtung, insbesondere für eine Kraftfahrzeugkuppiungseinrichtung, umfassend einen um eine Drehachse (2) herum angeordneten und im wesentlichen ringscheibenförmig ausgebildeten Belagträger (3), der vorzugsweise an beiden Stirnseiten (4, 5) mit einem Reibbelag (6) versehen ist, sowie ein um die Drehachse (2) herum angeordnetes und im wesentlichen scheibenförmig oder segmentiert ausgebildetes Mitnehmerteil (7', 7"), wobei der Belagträger (3) und das Mitnehmerteil (7', 7") miteinander verbunden sind,
**dadurch gekennzeichnet,**
**dass** der Belagträger (3) und das Mitnehmerteil (7', 7") durch eine Klebverbindung miteinander verbunden sind.

2. Mitnehmerscheibe nach Anspruch 1, **dadurch gekennzeichnet, dass** der Belagträger (3) und das Mitnehmerteil (7', 7") an einer in radiale Richtung verlaufenden, ebenen Ringfläche aneinander liegen.

3. Mitnehmerscheibe nach Anspruch 2, **dadurch gekennzeichnet, dass** sich die Ringfläche radial von einer Bohrung (8) im Belagträger (3) mit einem Innendurchmesser (D_{I}) bis zum Außendurchmesser (D_{A}) des Mitnehmerteils (7', 7") erstreckt.

4. Mitnehmerscheibe nach Anspruch 3, **dadurch gekennzeichnet, dass** die Differenz zwischen dem Außendurchmesser (D_{A}) des Mitnehmerteils (7', 7'') und dem Innendurchmesser (D_{I}) der Bohrung (8) im Belagträger (3) mindestens 15 %, vorzugsweise mindestens 25 %, des Außendurchmessers (D_{S}) der Mitnehmerscheibe beträgt.

5. Mitnehmerscheibe nach einem der Ansprüche 1 bis 4, **dadurch gekennzeichnet, dass** das Mitnehmerteil (7', 7") zweiteilig ausgebildet ist und jeweils ein Teil des Mitnehmerteils (7', 7") auf jeder Stirnseite (4, 5) des Belagträgers (3) aufgeklebt ist.

6. Mitnehmerscheibe nach Anspruch 5, **dadurch gekennzeichnet, dass** jedes Teil des Mitnehmerteils (7', 7") scheibenförmig ausgebildet ist.

7. Mitnehmerscheibe nach einem der Ansprüche 1 bis 6, **dadurch gekennzeichnet, dass** der mindestens eine Reibbelag (6) auf den Belagträger (3) aufgeklebt ist.

8. Mitnehmerscheibe nach einem der Ansprüche 1 bis 7, **dadurch gekennzeichnet, dass** der Belagträger (3) und das Mitnehmerteil (7', 7") aus unterschiedlichen Materialien bestehen.

9. Mitnehmerscheibe nach Anspruch 8, **dadurch gekennzeichnet, dass** der Belagträger (3) aus Leichtmetall besteht.

10. Mitnehmerscheibe nach Anspruch 9, **dadurch gekennzeichnet, dass** der Belagträger (3) aus Aluminium besteht.

11. Mitnehmerscheibe nach Anspruch 8, **dadurch gekennzeichnet, dass** das Mitnehmerteil (7', 7") aus Stahl besteht.

12. Mitnehmerscheibe nach Anspruch 11, **dadurch gekennzeichnet, dass** der Stahl gehärtet ist.

13. Mitnehmerscheibe nach einem der Ansprüche 1 bis 12, **dadurch gekennzeichnet, dass** das Mitnehmerteil (7', 7") mindestens eine Ausnehmung (9) für ein Federelement aufweist.

14. Mitnehmerscheibe nach einem der Ansprüche 1 bis 13, **dadurch gekennzeichnet, dass** der Belagträger (3) und das Mitnehmerteil (7', 7") zusätzlich zur Klebeverbindung mit einer Nietverbindung miteinander verbunden sind.

15. Verfahren zur Herstellung einer Mitnehmerscheibe (1) für eine Kupplungseinrichtung, insbesondere für eine Kraftfahrzeugkupplungseinrichtung, wobei die Mitnehmerscheibe (1) einen im wesentlichen ringscheibenförmig ausgebildeten Belagträger (3), mindestens einen mit dem Belagträger (3) verbundenen Reibbelag (6) sowie mindestens ein im wesentlichen scheibenförmig ausgebildetes Mitnehmerteil (7', 7") aufweist,
**dadurch gekennzeichnet,**
**dass** der Belagträger (3) und das mindestens eine Mitnehmerteil (7', 7") sowie der Belagträger (3) und der mindestens eine Reibbelag (6) in einem gleichzeitig durchgeführten Klebeprozess miteinander verbunden werden.

16. Verfahren nach Anspruch 15, **dadurch gekennzeichnet, dass** zwei Reibbeläge (6) an beiden Stirnseiten (4, 5) des Belagträgers (3) aufgeklebt werden.
